# FASCICULE DE BREVET EUROPEEN

(11) **EP 0 806 688 B1**
(45) Date de publication et mention de la délivrance du brevet: **26.03.2003**
(21) Numéro de dépôt: 97401037.3
(22) Date de dépôt: 07.05.1997
(51) Int. Cl.: G02B 6/38, G02B 6/255

(54) **Composant de centrage, procédé pour le raccordement d'une pluralité de fibres à une fibre multicoeur et coupleur/éclateur ainsi obtenu**
Zentrierelement, Verfahren für die Verbindung einer Anzahl von Fasern an eine Mehrkernfaser und so hergestellte Koppel-/Verteilervorrichtung
Centering device, process for connecting a plurality of fibres to a multicore fibre and coupler/distributor made thereby

(30) Priorité: 09.05.1996 FR 9605791
(43) Date de publication de la demande: 12.11.1997
(73) Titulaire: FRANCE TELECOM, 75015 Paris (FR)
(72) Inventeur: Perrin, Gabrielle, 22300 Ploubezre (FR); Le Marer, René, 22730 Tregastel (FR); Pecot, Alain, 22300 Lannion (FR)
(74) Mandataire: Martin, Jean-Jacques

(56) Documents cités:
- EP-A- 0 090 724
- EP-A- 0 568 382
- EP-A- 0 575 009
- EP-A- 0 576 266
- EP-A- 0 674 197
- EP-A- 0 674 198
- WO-A-94/25885
- US-A- 4 101 198
- PATENT ABSTRACTS OF JAPAN vol. 006, no. 125 (P-127), 10 juillet 1982 & JP 57 052013 A (NIPPON TELEGR & TELEPH CORP), 27 mars 1982,
- PATENT ABSTRACTS OF JAPAN vol. 005, no. 042 (P-053), 20 mars 1981 & JP 55 164802 A (NIPPON TELEGR & TELEPH CORP), 22 décembre 1980,
- PATENT ABSTRACTS OF JAPAN vol. 013, no. 073 (P-830), 20 février 1989 & JP 63 259602 A (NIPPON TELEGR & TELEPH CORP), 26 octobre 1988,

## Description

La présente invention est relative à un composant de centrage destiné à être utilisé pour le raccordement d'une pluralité de fibres à une fibre multicoeur.

Elle concerne également un procédé pour le raccordement d'une pluralité de fibres élémentaires à une fibre multicoeur.

Elle concerne enfin les éclateurs optiques obtenus par ce procédé.

Les fibres optiques multicoeurs sont des guides optiques comportant dans une même matrice linéaire une pluralité de coeurs de guidage parallèles.

De telles fibres optiques multicoeurs ont notamment été décrites dans la demande de brevet EP 611 973.

Le document EP 0 568 382 décrit un dispositif permettant d'aligner des séries de fibres en vue de leur raccordement par soudage. Un tel dispositif comprend des mâchoires venant en appui sur les fibres pour les maintenir en place dans les rainures.

Le document EP 0 674 197 décrit un support permettant de positionner des fibres les unes par rapport aux autres en vu de leur raccordement à une fibre multicoeur. Un tel support comprend une pièce présentant une rainure de précision dans laquelle sont introduites les fibres.

Il a déjà été proposé, notamment dans la demande de brevet français n° 94 03467 un procédé pour le raccordement d'une telle fibre multicoeur à une pluralité de fibres optiques élémentaires, dans lequel, après réduction de leur diamètre de gaine optique, les fibres élémentaires sont introduites dans un composant de centrage, également appelé férule, présentant une géométrie intérieure dans laquelle lesdites fibres élémentaires s'inscrivent nécessairement de telle sorte que la géométrie de leurs coeurs correspond à celle de la fibre multicoeur.

Un composant de centrage notamment pour la mise en oeuvre de ce procédé a été proposé dans la demande de brevet français n° 94 15775.

Une fois lesdites fibres élémentaires ainsi positionnées, elles sont figées à leur extrémité commune. Celle-ci peut alors être connectée à la fibre multicoeur, par exemple par des moyens de connectique classiques à embouts et moyens de restitution de centrage.

Dans ce procédé, le composant de centrage qui sert à positionner correctement les fibres élémentaires les unes par rapport aux autres reste en place sur lesdites fibres à l'issue de l'étape où lesdites fibres sont figées les unes sur les autres.

Un but de l'invention est de proposer un raccordement d'une fibre multicoeur à une pluralité de fibres élémentaires qui soit très bas coût.

A cet effet, l'invention propose un ensemble comportant une pluralité de fibres élémentaires F1 à F4 et une fibre multicoeur FM, lesdites fibres élémentaires F1 à F4 étant destinées à être raccordées à ladite fibre multicoeur FM, ledit ensemble comportant en outre un composant de centrage destiné à être positionné sur l'un des berceaux d'une machine de soudage pour le raccordement desdites fibres élémentaires (F1 à F4) à la fibre multicoeur FM étant caractérisé en ce que le composant de centrage comporte :
- deux demi-férules 2a, 2b définissant lorsqu'elles sont assemblées l'une sur l'autre, un espace intérieur tubulaire présentant une forme géométrique dans laquelle les fibres élémentaires F1 à F4 s'inscrivent nécessairement de façon que les axes de leurs coeurs sont disposés selon une géométrie correspondant à celle des axes des coeurs de la fibre multicoeur FM,
- ainsi que des moyens pour maintenir lesdites demi-férules 2a, 2b l'une sur l'autre de façon désolidarisable.

Elle propose également un procédé pour le raccordement d'une fibre optique multicoeur FM à une pluralité de fibres optiques F1 à F4 dans lequel on rassemble ces dernières et on les introduit dans un composant de centrage 1, dans lequel lesdites fibres F1 à F4 s'inscrivent nécessairement selon une géométrie correspondant à celle des axes de la fibre multicoeur FM, caractérisé en ce que le composant de centrage 1 comporte :
- deux demi-férules 2a, 2 définissant lorsqu'elles sont assemblées l'une sur l'autre, un espace intérieur tubulaire présentant une forme géométrique dans laquelle les fibres élémentaires F1 à F4 s'inscrivent nécessairement de façon que les axes de leurs coeurs sont disposés selon une géométrie correspondant à celle des axes des coeurs de la fibre multicoeur FM,
- ainsi que des moyens 3 pour maintenir lesdites demi-férules 2a, 2b l'une sur l'autre de façon désolidarisable.
et en ce que
on réalise une épissure soudée E entre la fibre multicoeur FM et la pluralité de fibres F1 à F4 rassemblées dans le composant de centrage 1, puis on libère l'élément optique ainsi obtenu des demi-férules 2a, 2b du composant de centrage 1.

Avec un tel procédé, le composant de centrage est réutilisable à l'issue d'un raccordement.

L'invention concerne également un appareil comportant une machine à souder présentant un premier et un deuxième berceau caractérisé en ce que, pour le raccordement d'une fibre multicoeur avec une pluralité de fibres élémentaires, il comporte également un composant de centrage destiné à être positionné sur l'un des berceaux et qui comprend :
- deux demi-férules 2a, 2b définissant lorsqu'elles sont assemblées l'une sur l'autre, un espace intérieur tubulaire présentant une forme géométrique dans laquelle les fibres élémentaires F1 à F4 s'inscrivent nécessairement de façon que les axes de leurs coeurs sont disposés selon une géométrie correspondant à celle des axes des coeurs de la fibre multicoeur FM,
- ainsi que des moyens 3 pour maintenir lesdites demi-férules 2a, 2b l'une sur l'autre de façon désolidarisable.

D'autres caractéristiques et avantages de l'invention ressortiront encore de la description qui suit. Cette description est purement illustrative et non limitative. Elle doit être lue en regard des dessins annexés sur lesquels :
- la figure 1a est une vue en coupe d'une fibre multicoeur ;
- la figure 1b est une vue en coupe des fibres élémentaires destinées à être raccordées à la fibre multicoeur de la figure 1a, rassemblées dans leur composant de centrage ;

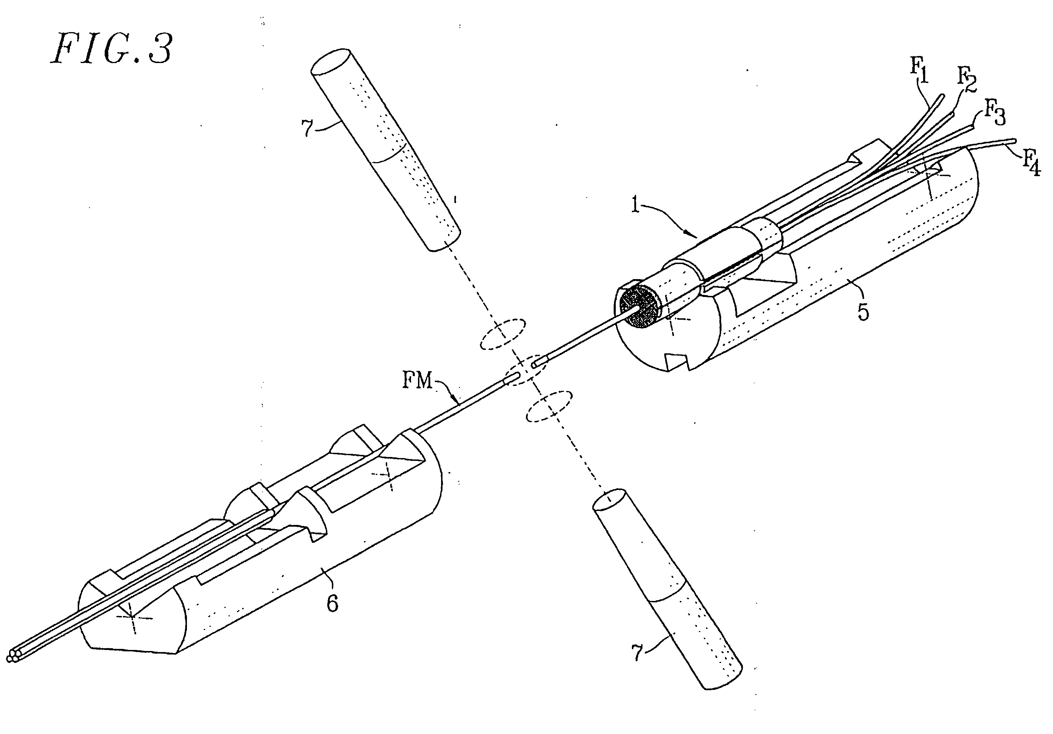

- la figure 2 est une vue en perspective éclatée du composant de centrage des fibres élémentaires de la figure 1b ;
- les figures 3 à 6 illustrent différentes étapes d'un mode de mise en oeuvre possible pour un procédé conforme à l'invention.

On a illustré sur les figures le cas du raccordement de quatre fibres élémentaires monomodes classiques F1 à F4 à une fibre FM à quatre coeurs.

Bien entendu, l'invention s'applique de façon générale à tout raccordement à des fibres multicoeurs : raccordements de p fibres élémentaires à une fibre à n coeurs, ou de plusieurs fibres p coeurs à une fibre n coeurs, avec p inférieur à n (éclatement d'une fibre à quatre coeurs en deux fibres deux coeurs par exemple).

Les quatre fibres élémentaires F1 à F4 sont mises en place dans un composant de centrage 1 en mettant en oeuvre la technique qui a été plus particulièrement décrite dans la demande de brevet français FR 94 03467.

A cet effet, les quatre fibres monomodes F1 à F4 - dont la gaine optique présente initialement un diamètre externe de 125 µm - sont soumises à une attaque chimique à l'acide fluorhydrique, de façon à réduire leur diamètre de gaine optique à un diamètre de 44 µm.

Selon que les fibres sont ou non dénudées de leur gaine mécanique lors de l'attaque chimique, la forme d'extrémité des fibres peut être conique ou cylindrique.

Après réduction de leur diamètre d'extrémité, les fibres F1 à F4 sont rassemblées. On utilise à cet effet la tension superficielle d'un liquide, qui est par exemple de l'acétone.

Les fibres ainsi rassemblées sont prêtes à être introduites dans le composant de centrage 1. Celui-ci est positionné sur une potence verticale, cette disposition facilitant l'introduction des fibres F1 à F4 rassemblées.

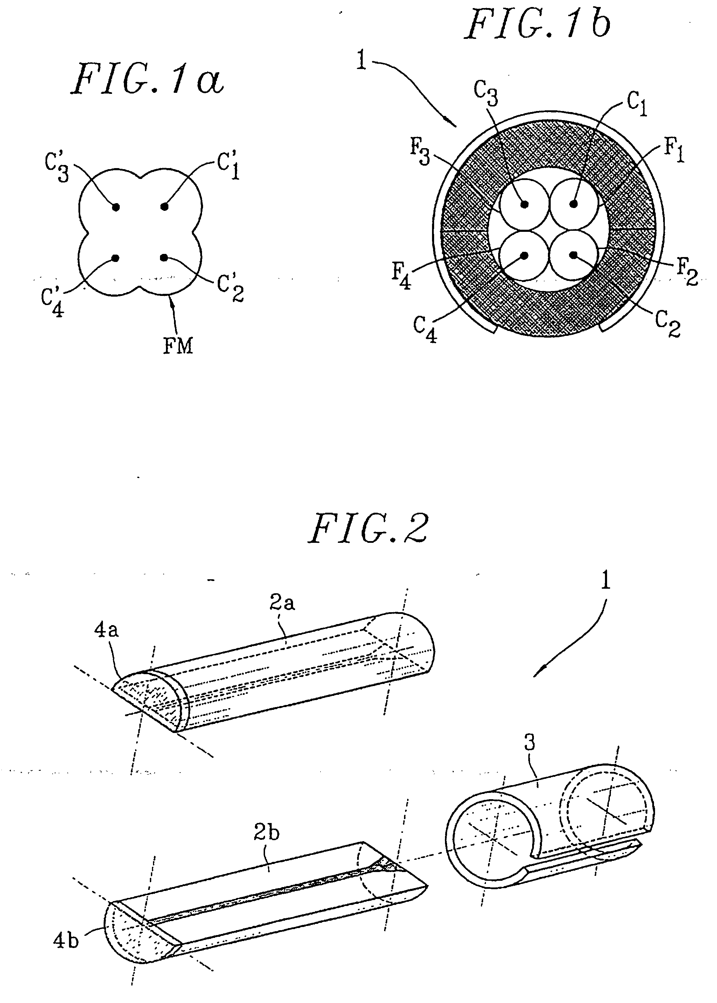

Ainsi qu'on l'a illustré sur les figures 1a et 1b, la géométrie intérieure du composant de centrage 1 est telle que les fibres F1 à F4 s'inscrivent nécessairement selon une disposition où leurs coeurs C1 à C4 s'étendent selon une géométrie qui coïncide avec celle des coeurs C'1 à C'4 de la fibre multicoeur FM - en l'occurrence un carré.

Plus particulièrement, le composant de centrage 1 est constitué de deux demi-férules 2a et 2b et d'une bague élastique 3 qui est une jupe fendue destinée à maintenir lesdites demi-férules 2a et 2b l'une sur l'autre.

Les demi-férules 2a et 2b se terminent par des demi-pastilles 4a et 4b destinées, lorsque lesdites demi-férules sont rapportées l'une sur l'autre, à définir une pastille calibrée dont le trou de centrage prolonge l'orifice de la férule définie par les deux demi-férules 2a et 2b.

Les dimensions intérieures de ce trou de centrage sont d'une précision inférieure au micromètre.

Une fois les fibres en place sur le composant de centrage 1, l'ensemble ainsi constitué est transféré sur l'un des berceaux 5 d'une machine à souder, dont l'autre berceau 6 reçoit la fibre multicoeur FM (figure 3).

Le composant de centrage 1 et la fibre multicoeur FM sont maintenus sur les berceaux 5 et 6 par des moyens presseurs, schématisés par des flèches sur la figure 3.

Les berceaux 5 et 6 sont montés sur des moyens piézoélectriques qui permettent de régler leur position relative horizontalement et verticalement.

Cette position relative est ajustée pour que l'axe de la fibre multicoeur FM soit confondu avec l'axe du trou de centrage de la pastille calibrée du composant de centrage 1.

La machine à souder comporte également des moyens permettant de régler l'orientation angulaire relative θ des deux berceaux 5 et 6 autour de cet axe commun, de façon à permettre l'alignement des coeurs C'1 à C'4 de la fibre multicoeur FM et des coeurs C1 à C4 des fibres élémentaires F1 à F4.

Ces moyens comprennent par exemple un rotateur manuel ou automatique agissant sur la position de la fibre multicoeur FM.

On notera qu'un tel réglage d'orientation est déjà connu en lui-même notamment dans des applications à la soudure de fibres à maintien de polarisation. On utilise avantageusement à cet effet la machine à souder commercialisée par la Société ERICSSON, qui permet des alignements de fibres et des positions angulaires de coeurs rigoureux.

Une fois la fibre multicoeur FM correctement positionnée vis à vis des fibres élémentaires F1 à F4 - l'extrémité de la fibre FM au voisinage immédiat des extrémités des fibres F1 à F4 - on réalise une soudure entre les gaines optiques de ladite fibre multicoeur FM et desdites fibres élémentaires F1 à F4 par exemple par soudure à l'arc électrique, ainsi que le schématise les électrodes 7 sur la figure 3, ou encore par soudure au laser CO₂, au chalumeau, ou encore au four à suscepteur graphite.

La fibre multicoeur FM est éventuellement, préalablement à sa mise en place sur le berceau 6, soumise à une attaque chimique appropriée, destinée à rendre son diamètre proche de celui des fibres F1 à F4, afin de rendre homogène la fusion de l'ensemble.
A l'issue de cette soudure, on obtient un éclateur optique constitué d'une fibre multicoeur prolongée par plusieurs fibres élémentaires, avec continuité des coeurs C'1 à C'4 de la fibre multicoeur FM et des coeurs C1 à C4 des fibres élémentaires F1 à F4, (c'est-à-dire absence de réflexion de Fresnel), et absence de mélange de couplage entre les coeurs.

En variante, il est également possible de régler la position angulaire relative des fibres élémentaires F1 à F4 et de la fibre multicoeur FM de façon à affecter les coeurs du composant coupleur/éclateur d'une atténuation contrôlée, ledit composant constituant alors également un composant atténuateur.

Bien entendu, les différents paramètres de la fusion, tels que les temps de chauffe ou les températures de fusion, sont gérés au cas par cas, par exemple par des moyens informatiques commandant les électrodes 7.

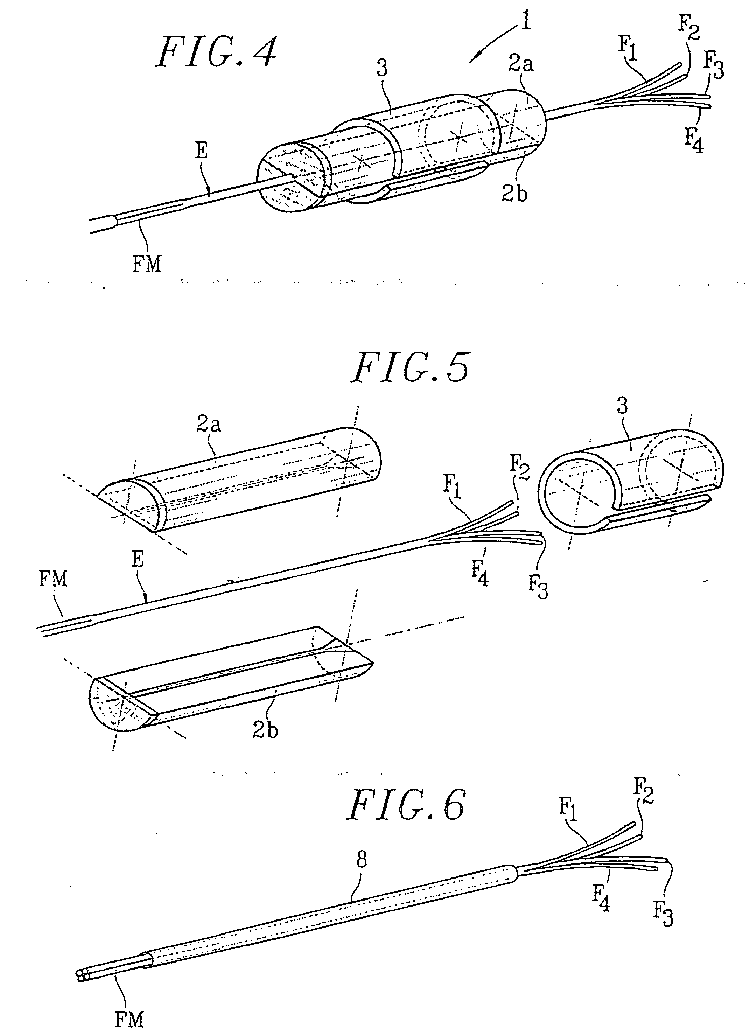

L'éclateur optique obtenu à l'issue de l'opération de soudage a été illustré sur la figure 4. La zone d'épissure a été référencée par E sur cette figure.

Une fois cet élément désolidarisé de la machine à souder, on libère les deux demi-férules 2a et 2b par dégagement de la bague élastique 3 (figure 5).

Le composant de centrage que constituent les deux demi-férules 2a et 2b et la bague élastique 3 peut alors être réutilisé pour une autre opération de soudage.

On protège ensuite avantageusement, ainsi qu'on l'a illustré sur la figure 6, la zone d'épissure E, ainsi que les parties de la fibre multicoeur FM et des fibres élémentaires F1 à F4 dépourvues de gaine mécanique, par un revêtement de protection 8.

Le composant final ainsi obtenu est un coupleur/éclateur optique pouvant se raccorder en ligne par soudure ou tout autre moyen de connectique classique, avec toutes les performances requises en atténuation (inférieure à 0,5 dB), en diaphonie (inférieure à 52 dB/coeur) et en réflexion (inférieur à 60 dB).

Ce composant, qui est dépourvu de férule, est d'un faible encombrement et se manipule et se stocke de la même façon qu'une fibre optique classique.

## Revendications

1. Ensemble comportant une pluralité de fibres élémentaires (F1 à F4) et une fibre multicoeur (FM), lesdites fibres élémentaires (F1 à F4) étant destinées à être raccordées à ladite fibre multicoeur (FM), ledit ensemble comportant en outre un composant de centrage destiné à être positionné sur l'un des berceaux d'une machine de soudage pour le raccordement desdites fibres élémentaires (F1 à F4) à la fibre multicoeur (FM) étant **caractérisé en ce que** le composant de centrage comporte :
- deux demi-férules (2a, 2b) définissant lorsqu'elles sont assemblées l'une sur l'autre, un espace intérieur tubulaire présentant une forme géométrique dans laquelle les fibres élémentaires (F1 à F4) s'inscrivent nécessairement de façon que les axes de leurs coeurs sont disposés selon une géométrie correspondant à celle des axes des coeurs de la fibre multicoeur (FM),
- ainsi que des moyens (3) pour maintenir lesdites demi-férules (2a, 2b) l'une sur l'autre de façon désolidarisable.

2. Ensemble selon la revendication 1, **caractérisé en ce que** les moyens de maintien comportent une bague élastique (3).

3. Ensemble selon la revendication 2, **caractérisé en ce que** la bague élastique (3) est une jupe fendue.

4. Ensemble selon l'une des revendications précédentes, **caractérisé en ce que** les demi-férules (2a, 2b) se terminent par des demi-pastilles (4a, 4b) destinées, lorsque les demi-férules sont rapportées l'une sur l'autre, à définir une pastille calibrée dont le trou de centrage prolonge l'orifice de la férule définie par les deux demi-férules (2a, 2b).

5. Procédé pour le raccordement d'une fibre optique multicoeur (FM) à une pluralité de fibres optiques (F1 à F4) dans lequel on rassemble ces dernières et on les introduit dans un composant de centrage (1) dans lequel lesdites fibres (F1 à F4) s'inscrivent nécessairement selon une géométrie correspondant à celle des axes de la fibre multicoeur (FM), **caractérisé en ce que** le composant de centrage (1) comporte :
- deux demi-férules (2a, 2b) définissant lorsqu'elles sont assemblées l'une sur l'autre, un espace intérieur tubulaire présentant une forme géométrique dans laquelle les fibres élémentaires (F1 à F4) s'inscrivent nécessairement de façon que les axes de leurs coeurs sont disposés selon une géométrie correspondant à celle des axes des coeurs de la fibre multicoeur (FM),
- ainsi que des moyens (3) pour maintenir lesdites demi-férules (2a, 2b) l'une sur l'autre de façon désolidarisable.
et **en ce que**
on réalise une épissure soudée (E) entre la fibre multicoeur (FM) et la pluralité de fibres (F1 à F4) rassemblées dans le composant de centrage (1), puis on libère l'élément optique ainsi obtenu des demi-férules (2a, 2b) du composant de centrage (1).

6. Procédé selon la revendication 5, **caractérisé en ce qu'**on protège par une gaine de protection (8) la zone d'épissure (E) ainsi que les parties de la fibre multicoeur et des fibres qui lui sont raccordées, qui sont dénudées.

7. Procédé selon l'une des revendications 5 et 6, **caractérisé en ce que**, préalablement à la soudure, on règle la position angulaire relative (θ) des fibres élémentaires (F1 à F4) rassemblées dans le composant de centrage (1) d'une part, et de la fibre multicoeur (FM) d'autre part.

8. Procédé selon la revendication 7, **caractérisé en ce que** la position angulaire relative (θ) des fibres élémentaires (F1 à F4) rassemblées dans le composant de centrage (1) d'une part, et de la fibre multicoeur (FM) d'autre part, est réglée de façon à affecter les coeurs de l'élément optique obtenu après fusion d'une atténuation contrôlée.

9. Appareillage comportant une machine à souder présentant un premier et un deuxième berceau **caractérisé en ce que**, pour le raccordement d'une fibre multicoeur avec une pluralité de fibres élémentaires, il comporte également un composant de centrage qui est destiné à être positionné sur l'un des berceaux et qui comprend :
- deux demi-férules (2a, 2b) définissant lorsqu'elles sont assemblées l'une sur l'autre, un espace intérieur tubulaire présentant une forme géométrique dans laquelle les fibres élémentaires (F1 à F4) s'inscrivent nécessairement de façon que les axes de leurs coeurs sont disposés selon une géométrie correspondant à celle des axes des coeurs de la fibre multicoeur (FM),
- ainsi que des moyens (3) pour maintenir lesdites demi-férules (2a, 2b) l'une sur l'autre de façon désolidarisable.

## Claims

1. An assembly comprising a plurality of individual fibers (F1 to F4) and a multi-core fiber (FM), said individual fibers (F1 to F4) being for connection to said multi-core fiber (FM), said assembly further comprising a centering component for positioning on one of the cradles of a welding machine for connecting said individual fibers (F1 to F4) to the multi-core fiber (FM), the assembly being **characterized in that** the centering component comprises:
- two half-ferrules (2a, 2b) which, when assembled one on the other, define a tubular inside space of geometrical shape in which the individual fibers (F1 to F4) necessarily occupy positions such that the axes of their cores are disposed in a configuration corresponding to the configuration of the axes of the cores of the multi-core fiber (FM);
- together with holding means (3) for holding said half-ferrules (2a, 2b) one on the other in releasable manner.

2. An assembly according to claim 1, **characterized in that** the holding means comprise a resilient ring (3).

3. An assembly according to claim 2, **characterized in that** the resilient ring (3) is a split skirt.

4. An assembly according to any preceding claim, **characterized in that** the half-ferrules (2a, 2b) are terminated by half-pellets (4a, 4b) suitable when the half-ferrules are placed one on the other for defining a calibrated pellet whose centering hole extends the orifice of the ferrule defined by the two half-ferrules (2a, 2b).

5. A method of connecting a multi-core optical fiber (FM) to a plurality of optical fibers (F1 to F4), in which method said plurality of optical fibers are assembled together and inserted into a centering component (1) in which said fibers (F1 to F4) necessarily take up positions in a configuration corresponding to the configuration of the axes of the multi-core fiber (FM), the method being **characterized in that** the centering component (1) comprises:
- two half-ferrules (2a, 2b) which, when assembled one on the other, define a tubular inside space of geometrical shape in which the individual fibers (F1 to F4) necessarily occupy positions such that the axes of their cores are disposed in a configuration corresponding to the configuration of the axes of the cores of the multi-core fiber (FM);
- together with holding means (3) for holding said half-ferrules (2a, 2b) one on the other in releasable manner
and **in that**
a welded splice (E) is made between the multi-core fiber (FM) and the plurality of fibers (F1 to F4) assembled together in the centering component (1), and then the resulting optical element is separated from the half-ferrules (2a, 2b) of the centering component (1).

6. A method according to claim 5, **characterized in that** the splice zone (E) together with the portions of the multi-core fiber and the fibers that are connected thereto that have been stripped are protected by means of a protective sheath (8).

7. A method according to claim 5 or claim 6, **characterized in that** prior to welding, the angular position (θ) of the individual fibers (F1 to F4) assembled together in the centering component (1) is set relative to the multi-core fiber (FM).

8. A method according to claim 7, **characterized in that** the angular position (θ) of the individual fibers (F1 to F4) assembled together in the centering component (1) relative to the multi-core fiber (FM) is set in such a manner as to impart controlled attenuation to the cores of the optical element obtained after melting.

9. Apparatus comprising a welding machine having first and second cradles, the apparatus being **characterized in that** in order to connect a multi-core fiber to a plurality of individual fibers, it also comprises a centering component which is designed to be positioned on one of the cradles and which comprises:
- two half-ferrules (2a, 2b) which, when assembled one on the other, define a tubular inside space of geometrical shape in which the individual fibers (F1 to F4) necessarily occupy positions such that the axes of their cores are disposed in a configuration corresponding to the configuration of the axes of the cores of the multi-core fiber (FM);
- together with holding means (3) for holding said half-ferrules (2a, 2b) one on the other in releasable manner.

## Patentansprüche

1. Baugruppe, die mehrere Elementarfasern (F1 bis F4) und eine Mehrkernfaser (FM) umfaßt, wobei die Elementarfasern (F1 bis F4) dazu bestimmt ist, mit der Mehrkernfaser (FM) verbunden zu werden, die Baugruppe außerdem ein Zentrierelement umfaßt, das dazu bestimmt ist, auf einer Halterung von Halterungen eines Schweißgerätes für die Verbindung der Elementarfasern (F1 bis F4) mit der Mehrkernfaser (FM) positioniert zu werden, **dadurch gekennzeichnet, daß** das Zentrierelement folgendes umfaßt:
- zwei Halbferrulen (2a, 2b), die, wenn sie miteinander montiert sind, einen röhrenförmigen Innenraum definieren, der eine geometrische Form aufweist, in der sich die Elementarfasern (F1 bis F4) derart zwangseinfügen, daß die Achsen ihrer Kerne gemäß einer Geometrie angeordnet sind, die derjenigen der Achsen der Kerne der Mehrkernfaser (FM) entspricht;
- sowie Mittel (3) zum trennbaren Zusammenhalten der Halbferrulen (2a, 2b) miteinander.

2. Baugruppe nach Anspruch 1, **dadurch gekennzeichnet, daß** die Haltemittel einen elastischen Ring (3) umfassen.

3. Baugruppe nach Anspruch 2, **dadurch gekennzeichnet, daß** der elastische Ring (3) eine geschlitzte Schürze ist.

4. Baugruppe nach einem der vorhergehenden Ansprüche, **dadurch gekennzeichnet, daß** die Halbferrulen (2a, 2b) in Halbplättchen (4a, 4b) enden, die dazu bestimmt sind, wenn die Halbferrulen aneinander gesetzt sind, ein kalibriertes Plättchen zu definieren, dessen Zentrierloch die Öffnung der durch die beiden Halbferrulen (2a, 2b) definierten Ferrule zu verlängern.

5. Verfahren zum Verbinden einer optischen Mehrkernfaser (FM) mit mehreren optischen Fasern (F1 bis F4), bei dem die letzteren gesammelt und in ein Zentrierelement (1) eingeführt werden, in dem sich die Fasern (F1 bis F4) gemäß einer Geometrie zwangseinfügen, die derjenigen der Achsen der Mehrkernfaser (FM) entspricht, **dadurch gekennzeichnet, daß** das Zentrierelement (1) folgendes umfaßt:
- zwei Halbferrulen (2a, 2b), die, wenn sie miteinander montiert sind, einen röhrenförmigen Innenraum definieren, der eine geometrische Form aufweist, in der sich die Elementarfasern (F1 bis F4) derart zwangseinfügen, daß die Achsen ihrer Kerne gemäß einer Geometrie angeordnet sind, die derjenigen der Achsen der Kerne der Mehrkernfaser (FM) entspricht;
- sowie Mittel (3) zum trennbaren Zusammenhalten der Halbferrulen (2a, 2b) miteinander,
und dadurch, daß
- eine Schweiß-Spleißung (E) zwischen der Mehrkernfaser (FM) und den mehreren im Zentrierelement (1) gesammelten Fasern (F1 bis F4) durchgeführt wird, und schließlich das so erhaltene optische Element aus den Halbferrulen (2a, 2b) des Zentrierelementes (1) befreit wird.

6. Verfahren nach Anspruch 5, **dadurch gekennzeichnet, daß** die Spleißzone (E) sowie die Abschnitte der Mehrkernfaser und der Fasern, die mit dieser verbunden sind, die freigelegt sind, mit einem Schutzmantel (8) geschützt werden.

7. Verfahren nach einem der Ansprüche 5 und 6, **dadurch gekennzeichnet, daß** vor dem Schweißen die relative Winkelposition (θ) einerseits der im Zentrierelement (1) gesammelten Elementarfasern (F1 bis F4) und andererseits der Mehrkernfaser (FM) eingestellt wird.

8. Verfahren nach Anspruch 7, **dadurch gekennzeichnet, daß** die relative Winkelposition (θ) einerseits der im Zentrierelement (1) gesammelten Elementarfasern (F1 bis F4) und andererseits der Mehrkernfaser (FM) derart eingestellt wird, daß den Fasern des nach dem Schmelzen erhaltenen optischen Elementes eine kontrollierte Dämpfung zugeordnet wird.

9. Apparatur, die ein Schweißgerät umfaßt, das eine erste und eine zweite Halterung aufweist, **dadurch gekennzeichnet, daß** sie für die Verbindung einer Mehrkernfaser mit mehreren Elementarfasern auch ein Zentrierelement umfaßt, das dazu bestimmt ist, auf einer der Halterungen positioniert zu werden, und- die folgendes umfaßt:
- zwei Halbferrulen (2a, 2b), die, wenn sie miteinander montiert sind, einen röhrenförmigen Innenraum definieren, der eine geometrische Form aufweist, in die sich die Elementarfasern (F1 bis F4) derart zwangseinfügen, daß die Achsen ihrer Kerne gemäß einer Geometrie angeordnet sind, die derjenigen der Achsen der Kerne der Mehrkernfaser (FM) entspricht,
- sowie Mittel (3) zum trennbaren Zusammenhalten der Halbferrulen (2a, 2b) miteinander.
